# EUROPEAN PATENT APPLICATION

(11) **EP 3 101 644 A1**
(43) Date of publication of application: **07.12.2016**
(21) Application number: 15740733.9
(22) Date of filing: 22.01.2015
(51) Int. Cl.: G09B 23/34, A61C 19/06

(54) **DENTAL-PULP-CAVITY MODEL**

(30) Priority: 27.01.2014 JP 2014012194
(71) Applicant: Nissin Dental Products Inc., Kyoto-shi, Kyoto 601-8469 (JP)
(72) Inventor: OSE, Kazuhisa, Kameoka-shi Kyoto 621-0001 (JP); JIA, Xiao Chun, Kameoka-shi Kyoto 621-0001 (JP)
(74) Representative: Berglund, Stefan
(86) International application number: PCT/JP2015/051694
(87) International publication number: WO 2015/111659

(57) **Abstract**

The purpose of the present invention is to provide a dental-pulp-cavity model which is capable of forming a simulated dental-pulp cavity having a desired shape, and which can be produced easily. This dental-pulp-cavity model (1) is provided with: a tooth body section (10) configured from a transparent member; and a simulated dental-pulp cavity (30) formed in the tooth body section (10). The tooth body section (10) is provided with: a first main body member (11) provided with a first contact surface (12); a second main body member (21) provided with a second contact surface (22) which comes into contact with the first contact surface (12); and dental-pulp-cavity grooves (13, 23) which are formed in the first contact surface (12) and/or the second contact surface (22), and which correspond to the shape of the simulated dental-pulp cavity (30).

## Description

### TECHNICAL FIELD

The present invention relates to a dental-pulp-cavity model including a tooth body section and a simulated dental-pulp cavity formed in the tooth body section.

### BACKGROUND ART

A variety of artificial teeth are used conventionally in the field of dentistry. For example, a dental-pulp-cavity model has been proposed which includes a tooth body section configured by transparent resin and a simulated dental-pulp cavity formed in this tooth body section, and is used, for example, in the training for treatment of cavities reaching the dental pulp (for example, refer to Japanese Unexamined Patent Application, Publication No. 2012-68605).

Such a dental-pulp-cavity model is produced by arranging a simulated dental pulp which simulates the shape of dental-pulp in a forming die that forms a tooth body section, then filling resin in this forming die and curing, and extracting the simulated dental pulp after the resin has cured.

Patent Document 1: Japanese Unexamined Patent Application, Publication No. 2012-68605

### DISCLOSURE OF THE INVENTION

### Problems to be Solved by the Invention

With the conventional dental-pulp-cavity model, since the simulated dental-pulp cavity is formed by pulling the simulated dental pulp out from the cured resin formed article in this way, there is limitation to the shape of the simulated dental pulp. In other words, with the conventional dental-pulp-cavity model, it has not been possible to form a simulated dental-pulp cavity having a greatly curved shape or a simulated dental-pulp cavity having a shape that becomes thicker from the base end side toward the tip end side, and then becomes thinner.

Therefore, it is an object of the present invention to provide a dental-pulp-cavity model which can form a simulated dental-pulp cavity having a desired shape, and which can be produced easily.

### Means for Solving the Problems

The present invention relates to a dental-pulp-cavity model including a tooth body section configured by a transparent member, and a simulated dental-pulp cavity formed in the tooth body section, in which the tooth body section includes: a first main body member having a first contact surface; a second main body member having a second contact surface comes into contact with the first contact surface; and a dental-pulp-cavity groove which is formed in at least at one of the first contact surface and the second contact surface, and corresponds to a shape of the simulated dental-pulp cavity.

Furthermore, it is preferable that the dental-pulp-cavity groove includes: a tooth crown dental-pulp-cavity groove which constitutes a base end side of the simulated dental-pulp cavity; and a root canal cavity groove that extends from the tooth crown dental-pulp-cavity groove to a tip end side, and in which the root canal cavity groove is formed only in one among the first contact surface and the second contact surface.

Furthermore, it is preferable that a cross section of the first main body member is formed in a convex shape with the first contact surface as an end face, a cross section of the second main body member is formed in a concave shape with the second contact surface as a bottom face, and the first main body member and the second main body member are coupled by means of a dovetail groove mechanism which allows for coupling by sliding in a direction in which the simulated dental-pulp cavity extends.

Furthermore, it is preferable that the width of the first contact surface and the width of the second contact surface gradually become narrower from a base end side toward a tip end side of the simulated dental-pulp cavity.

Furthermore, it is preferable that a height of a convex shape portion of the first main body member is slightly higher than a depth of a concave shape portion of the second main body member.

Furthermore, it is preferable that a cross section in a width direction of the dental-pulp-cavity groove is formed in a polygonal shape.

Furthermore, it is preferable that a tip portion of the simulated dental-pulp cavity is open to outside.

### Effects of the Invention

According to the dental-pulp-cavity model of the present invention, it is possible to form a simulated dental-pulp cavity having a desired shape, and it is possible to produce it easily.

### BRIEF DESCRIPTION OF THE DRAWINGS

FIG. 1 is a perspective view illustrating a dental-pulp-cavity model according to the first embodiment of the present invention;
FIG. 2 is a plan view illustrating a dental-pulp-cavity model according to the first embodiment;
FIG. 3 is an exploded perspective view illustrating a dental-pulp-cavity model according to the first embodiment;
FIG. 4 is a plan view illustrating a first main body member;
FIG. 5 is a plan view illustrating a second main body member;
FIG. 6 is a cross-sectional view along a line A-A of FIG. 2;
FIG. 7 is a cross-sectional view along a line B-B of FIG. 2;
FIG. 8 is a view illustrating an example of the shape of a simulated dental-pulp cavity;
FIG. 9 is a view illustrating an example of the shape of a simulated dental-pulp cavity;
FIG. 10 is a view illustrating an example of the shape of a simulated dental-pulp cavity; and
FIG. 11 is a view illustrating an example of the shape of a simulated dental-pulp cavity.

### PREFERRED MODE FOR CARRYING OUT THE INVENTION

In the following, each of the preferred embodiments of a dental-pulp-cavity model of the present invention will be described with reference to the drawings.

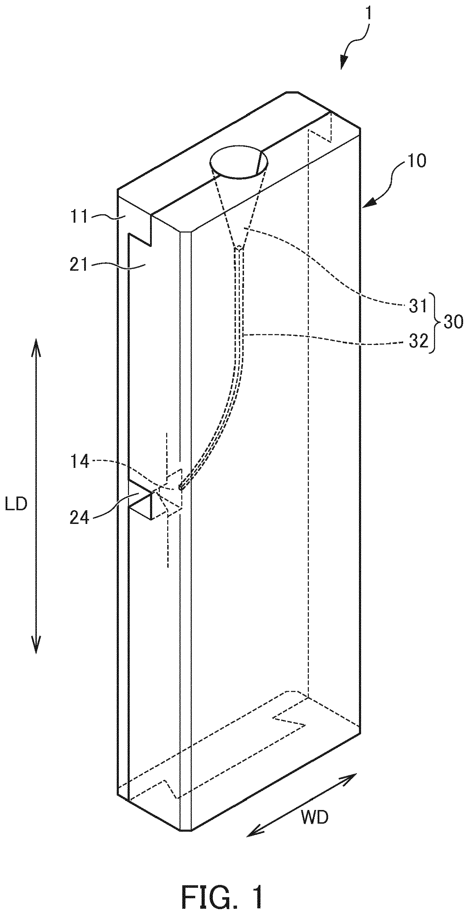

A dental-pulp-cavity model 1 of the present embodiment is a dental-pulp-cavity model 1 used for the study of dental medical technology or for training for dental students or residents. As illustrated in FIG. 1, the dental-pulp-cavity model 1 includes a tooth body section 10 configured by a transparent member made of epoxy resin or acrylic resin, and a simulated dental-pulp cavity 30 formed in this tooth body section 10.

The tooth body section 10 constitutes a section corresponding to a tooth crown and a tooth root of a tooth. The simulated dental-pulp cavity 20 constitutes a section corresponding to dental pulp formed to extend from the tooth crown to the tooth root. In the present embodiment, the simulated dental-pulp cavity 30 includes a tooth crown dental-pulp-cavity section 31 formed at a location corresponding to the tooth crown, and a tooth root cavity section 32 that extends toward a portion corresponding to the tooth root from this tooth crown dental-pulp-cavity section 31. In the present embodiment, the tooth root cavity section 32 is curved midway, and a tip portion of this tooth root cavity section 32 is open to the outside.

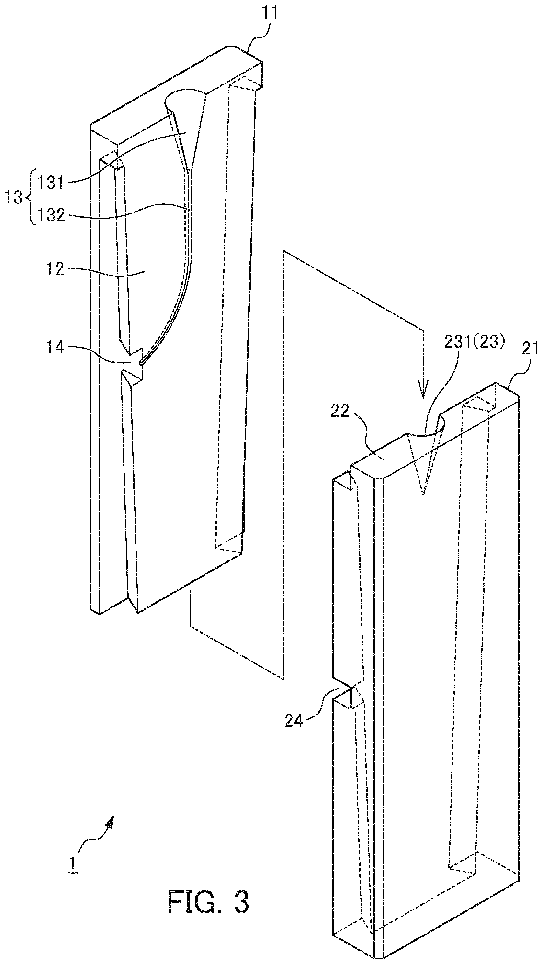

As illustrated in FIGS. 1 and 3, the dental-pulp-cavity model 1 of the present embodiment is configured by a first main body member 11 and a second main body member 21.

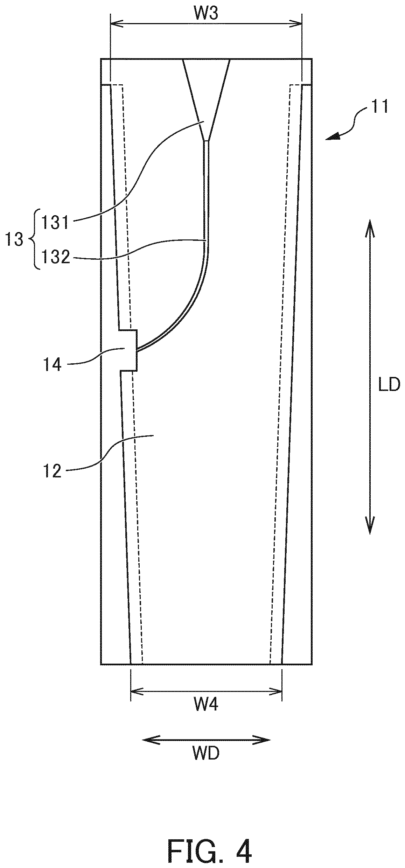

As illustrated in FIGS. 3 and 4, the first main body member 11 is configured to be in a rectangular plate shape in a plan view. The first main body member 11 includes a first contact surface 12, and a dental-pulp-cavity groove 13 formed in the first contact surface 12. The first contact surface 12 constitutes one plate face of the first main body member 11 of plate shape. In the present embodiment, the first contact surface 12 is configured in a planar shape.

The dental-pulp-cavity groove 13 is formed to extend from one end side to the other end side in the longitudinal direction LD of the first contact surface 12. As illustrated in FIGS. 1 to 3, the dental-pulp-cavity groove 13 includes a tooth crown dental-pulp-cavity groove 131, and a root canal cavity groove 132. The tooth crown dental-pulp-cavity groove 131 is arranged at one end in the longitudinal direction LD of the first main body member 11. As illustrated in FIGS. 1 to 4, the tooth crown dental-pulp-cavity groove 131 is formed in a shape having a width that becomes narrower from the base end side toward the tip end side, and a depth that becomes shallower (semicircular cone shape).

The root canal cavity groove 132 is arranged so as to continue to the tip portion of the tooth crown dental-pulp-cavity groove 131. As illustrated in FIG. 4, the root canal cavity groove 132 extends to the other end side in the longitudinal direction LD of the first contact surface 12, and is formed in a curved shape midway. The tip portion of the root canal cavity groove 132 extends up to a side face of the first main body member 11. More specifically, a first concave portion 14 which is recessed in the width direction is formed at a side face of the first main body member 11. Then, the tip portion of the root canal cavity groove 132 is connected to the first concave portion 14.

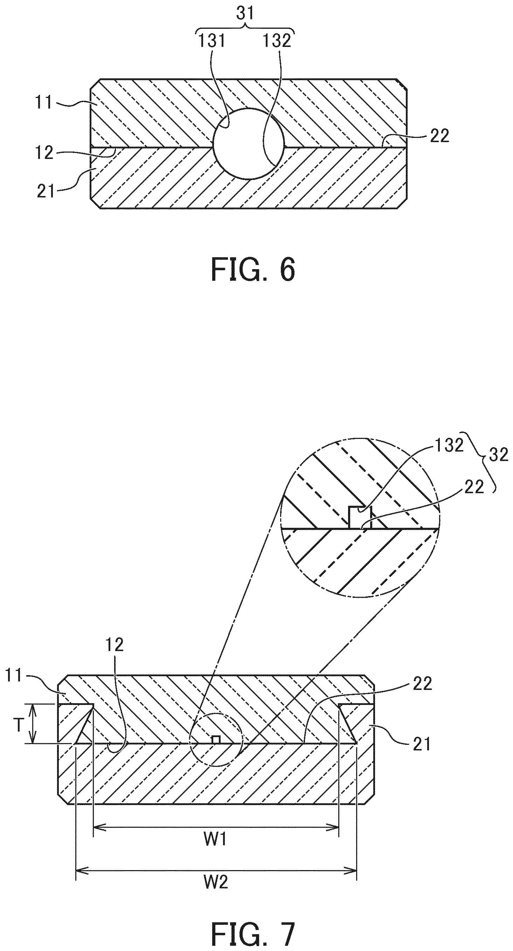

In the present embodiment, a cross section in the width direction of the root canal cavity groove 132 is configured in a polygonal shape (herein, a quadrangle shape), as illustrated in FIGS. 3 and 7.

As illustrated in FIGS. 3 and 7, the cross section in the width direction WD of the first main body member 11 (the direction intersecting with the direction of the dental-pulp-cavity groove 13 extending) as described above is formed in a convex shape with the first contact surface 12 as an end face. More specifically, the convex shape of the first main body member 11 is formed in such a manner that the width W2 of the tip portion (the first contact surface 12) is wider than the width W1 of the base end portion. In addition, as illustrated in FIG. 4, the width of the first contact surface 12 gradually becomes narrower from the base end side of the dental-pulp-cavity groove 13 (the side of the tooth crown dental-pulp-cavity groove 131, refer to the width W3) toward the tip end side (the side of the root canal cavity groove 132, refer to the width W4).

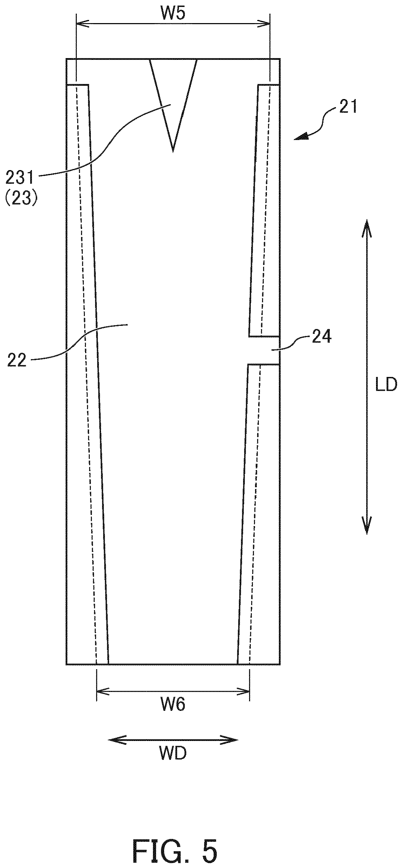

As illustrated in FIGS. 3 and 5, the second main body member 21 is configured to be in a rectangular plate shape in a plan view. The second main body member 21 includes a second contact surface 22, and a dental-pulp-cavity groove 23 formed at the second contact surface 22. The second contact surface 22 constitutes one plate face of the second main body member 21 of plate shape. In the present embodiment, the second contact surface 22 is configured in a planar shape.

In the present embodiment, only the tooth crown dental-pulp-cavity groove 231 is formed as the dental-pulp-cavity groove 23 in the second contact surface 22. In other words, in the present embodiment, the root canal cavity groove is formed only in the first contact surface 12. As described later, the tooth crown dental-pulp-cavity groove 231 is formed at a location facing the tooth crown dental-pulp-cavity groove 131, in a case of coupling the first main body member 11 with the second main body member 21. As illustrated in FIGS. 1 to 3 and 5, the tooth crown dental-pulp-cavity groove 231 is formed in a shape having a width that becomes narrower from the base end side toward the tip end side and a depth that becomes shallower (semicircular cone shape).

As illustrated in FIGS. 3 and 7, the cross section in the width direction WD of the second main body member 21 as described above is formed in a concave shape with the second contact surface 22 as a bottom face. More specifically, the concave shape of the second main body member 21 is formed in such a manner that the width W2 of the base end portion (the second contact surface 22) is wider than the width W1 of the tip portion. In addition, as illustrated in FIG. 5, the width of the second contact surface 22 gradually becomes narrower from the base end side of the dental-pulp-cavity groove 13 (the side of the tooth crown dental-pulp-cavity groove 131, refer to the width W5) toward the tip end side (refer to the width W4).

The concave shape of the second main body member 21 is configured to be in a shape and size corresponding to the convex shape of the first main body member 11. Furthermore, the depth T of the concave shape in the second main body member 21 is set to be slightly (for example, 0.03 mm to 0.07 mm) less than the height T of the convex shape of the first main body member 11.

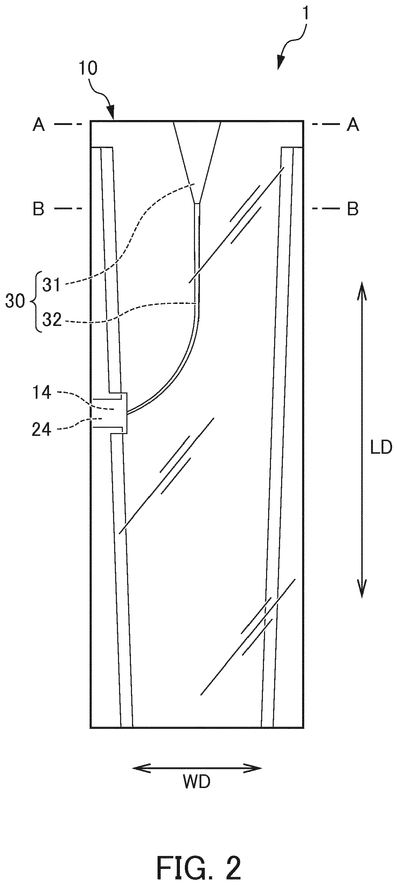

In addition, a second concave portion 24 which is recessed in the width direction is formed in a side face of the second main body member 21. The second concave portion 24 is formed at a location overlapping with the first concave portion in the width direction WD, in a case of coupling the first main body member 11 with the second main body member 21 (refer to FIGS. 1 and 2).

The first main body member 11 is molded by filling the abovementioned resin material into a die having a die surface in a shape corresponding to the first contact surface 12 and the dental-pulp-cavity groove 13. Similarly, the second main body member 21 is molded by filling the resin material into a die having a die surface in a shape corresponding to the second contact surface 22 and the dental-pulp-cavity groove 23.

The dental-pulp-cavity model 1 according to the present embodiment is configured by coupling the first main body member 11 with the second main body member 21 so that the first contact surface 12 is brought into contact with the second contact surface 22. More specifically, as illustrated in FIG. 3, the first main body member 11 is coupled with the second main body member 21 by sliding the first main body member 11 and the second main body member 21 in the longitudinal direction LD so that the convex shape portion of the first main body member 11 fits into the concave shape portion of the second main body member 21. In other words, in the present embodiment, the first main body member 11 and the second main body member 21 are coupled by means of a dovetail groove mechanism which is configured by the convex shape portion of the first main body member 11 and the concave shape portion of the second main body member 21.

Then, in the state in which the first main body member 11 is coupled with the second main body member 21, the simulated dental-pulp cavity 30 is configured by the dental-pulp cavity groove 13 and the dental-pulp cavity groove 23. More specifically, as illustrated in FIG. 6, the tooth crown dental-pulp-cavity section 31 is configured by the tooth crown dental-pulp-cavity groove 131 formed in the first contact surface 12 and the tooth crown dental-pulp-cavity groove 231 formed in the second contact surface 22. In addition, as illustrated in FIG. 7, the tooth root cavity section 32 is configured by the root canal cavity groove 132 formed in the first contact surface 12, and the second contact surface 22.

With such a configuration, as illustrated in FIG. 7, the location of a contact surface in the tooth root cavity section 32 of the first contact surface 12 and the second contact surface 22 deviates from the center portion in the cross section of the simulated dental-pulp cavity 30.

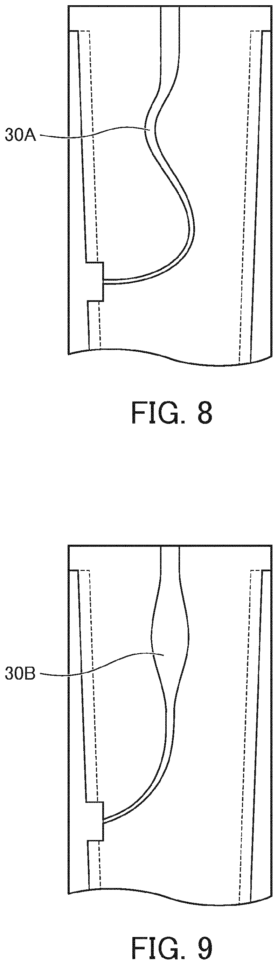

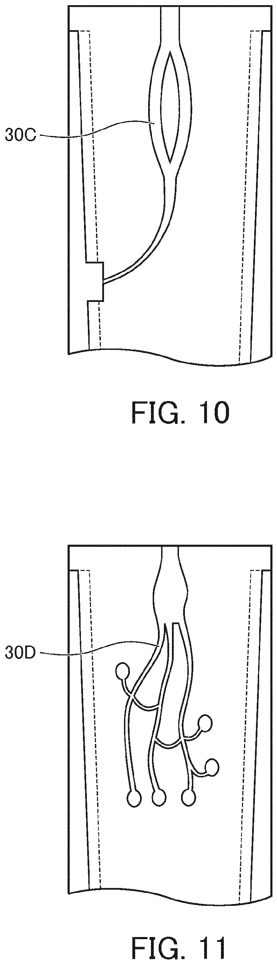

According to the dental-pulp-cavity model 1 according to the present embodiment as described above, the following effects will be exerted.
(1) The dental-pulp-cavity model 1 is configured so as to include the first main body member 11 having the first contact surface 12 and the second main body member 21 having the second contact surface 22, which is brought into contact with the first contact surface 12, whereby the dental-pulp-cavity grooves 13, 23 are formed in at least one of the first contact surface 12 and the second contact surface 22. With such a configuration, since the groove formed in the surface of the first main body member 11 or the surface of the main body member 21 (the first contact surface 12 or the second contact surface 22) can constitute the simulated dental-pulp cavity 30, the degree of freedom in the shape of the simulated dental-pulp cavity 30 can be raised. In other words, according to the dental-pulp-cavity model 1 of the present application, it is possible to easily form a simulated dental-pulp cavity 30A in a greatly curved shape (refer to FIG. 8), a simulated dental-pulp cavity 30B having a shape that becomes thicker midway and then becomes thinner again (refer to FIG. 9), a simulated dental-pulp cavity 30C having a shape it once branches midway and then merges again (refer to FIG. 10), or a simulated dental-pulp cavity 30D in a more complicated shape (refer to FIG. 11), for which formation has been difficult with conventional dental-pulp-cavity models. Furthermore, it is possible to easily produce the dental-pulp-cavity model 1 including the simulated dental-pulp cavity 30 by coupling the first main body member 11 and the second main body member 21 so that the first contact surface 12 is brought into contact with the second contact surface 22.
   Moreover, since the first main body member 11 can be separated from the second main body member 21 after use of the simulated dental-pulp-cavity model 1, it is possible to easily perform inspection of the state of the simulated dental-pulp cavity 30 after using the dental-pulp-cavity model 1.
(2) The dental-pulp-cavity grooves 13, 23 is configured so as to include the tooth crown dental-pulp-cavity grooves 131, 231 and the root canal cavity groove 132, and the root canal cavity groove 132 is formed only in the first contact surface 12. With such a configuration, it is possible to cause the location of a contact portion of the first contact surface 12 and the second contact surface 22, in a portion in which the simulated dental-pulp cavity 30 (the tooth root cavity section 32) is formed, to deviate from the center portion in the cross section of the simulated dental-pulp cavity 30. Therefore, since it is possible to configure so that a tip of equipment (for example, a file) inserted into the simulated dental-pulp cavity 30 is unlikely to contact with contact portion of the first contact surface 12 and the second contact surface 22, it is possible to prevent the tip of the equipment inserted into the simulated dental-pulp cavity 30 from contacting the contact portion and hindering movement of the equipment. As a result, it is possible to reproduce more precise movement of equipment inside the simulated dental-pulp cavity 30.
(3) The first main body member 11 is coupled with the second main body member 21 by means of a dovetail groove mechanism. With such a configuration, the first main body member 11 can be coupled with the second main body member 21 easily, and in a manner preferably retaining a contact state of the first contact surface 12 and the second contact surface 22. Therefore, it is possible to prevent medicine, etc. from leaking out to a boundary part between the first contact surface 12 and the second contact surface 22, when filling medicine into the simulated dental-pulp cavity 30.
(4) The width of the first contact surface 12 and the width of the second contact surface 22 are configured so as to gradually become narrower from the base end side toward the tip end side of the simulated dental-pulp cavity 30. With such a configuration, since it becomes possible to make the width at the tip end side in a convex shape narrower than the width at the base end side in a concave shape, it is possible to easily couple the first main body member 11 and the second main body member 21. Furthermore, since it is possible to determine a coupling location of the first main body member 11 and the second main body member 21 by appropriately setting the width of the first contact surface 12 and the width of the second contact surface 22, it is possible to easily determine a coupling location of the first main body member 11 and the second main body member 21 without providing a stopper or the like.
(5) The height of the convex shape portion is set to be slightly higher than the depth of the concave shape portion. With such a configuration, adhesion property between the first contact surface 12 and the second contact surface 22 can be enhanced when coupling the first main body member 11 and the second main body member 21.
(6) The cross section in the width direction of the dental-pulp-cavity groove (the root canal cavity groove 132) is formed in a polygonal shape. With such a configuration, for example, it is possible to configure a simulated dental-pulp cavity 30 which does not easily clog due to filing chips when using equipment like that which files down the wall surface of the simulated dental-pulp cavity 30, for example, on the simulated dental-pulp-cavity model 1. Therefore, it is possible to use the dental-pulp-cavity model 1 more easily.
(7) In an actual situation, the tip portion of a dental-pulp cavity is connected to nerves and blood vessels.
Therefore, the tip portion of the simulated dental-pulp cavity 30 is open to the outside. With such a configuration, in a case of filling medicine into the simulated dental-pulp cavity 30, since it is possible to discharge the air inside the simulated dental-pulp cavity 30 to the outside from the tip portion of the simulated dental-pulp cavity 30, it is possible to suitably fill the medicine into the simulated dental-pulp cavity 30. With such a configuration, it is possible to reproduce the filling of medicine into the simulated dental-pulp cavity 30 more precisely.

Although each of the preferred embodiments of the dental-pulp-cavity model 1 of the present invention is described above, the present invention is not to be limited to the abovementioned embodiments, and can be modified appropriately.

For example, although the root canal cavity groove 132 is formed only in the first contact surface 12 in the present embodiment, the present invention is not limited thereto. In other words, the root canal cavity groove may be formed in both the first contact surface and the second contact surface.

Furthermore, although the tip portion of the simulated dental-pulp cavity 30 is open to the outside in the present embodiment, the present invention is not limited thereto. In other words, the tip of the simulated dental-pulp cavity may not be open. In such a case, as illustrated in FIG. 11, it may be configured so that predetermined closed spaces are formed at tip portions of the simulated dental-pulp cavities 30D, and a member having a liquid absorbing property (for example, porous silicon) is arranged in these closed spaces.

Furthermore, although the first contact surface 12 and the second contact surface 22 are formed in a planar shape, the present invention is not limited thereto. In other words, it may be configured so that the first contact surface and the second contact surface are formed by curved surfaces.

Furthermore, an opposite surface to the contact surface of the first main body member and/or the second main body member may be formed so as to be a convex curved surface. With such a configuration, it is possible to enlarge a simulated dental-pulp cavity for observation.

Furthermore, an adhesive may be applied to the first contact surface or the second contact surface. With such a configuration, it is possible to more closely adhere between the first contact surface and the second contact surface.

Furthermore, although the first main body member 11 is coupled with the second main body member 21 by means of the dovetail groove mechanism in a removable manner in the present embodiment, the present invention is not limited thereto. In other words, the first main body member may be coupled with the second main body member by another method.

### EXPLANATION OF REFERENCE NUMERALS

- 1: dental-pulp-cavity model
- 10: tooth body section
- 11: first main body member
- 12: first contact surface
- 13: dental-pulp-cavity groove
- 21: second main body member
- 22: second contact surface
- 23: dental-pulp-cavity groove
- 30: simulated dental-pulp cavity
- 31: tooth crown dental-pulp-cavity section
- 32: tooth root cavity section
- 131: tooth crown dental-pulp cavity groove
- 132: root canal cavity groove
- 231: tooth crown dental-pulp-cavity groove

## Claims

1. A dental-pulp-cavity model comprising a tooth body section configured by a transparent member, and a simulated dental-pulp cavity formed in the tooth body section,
wherein the tooth body section includes:
a first main body member having a first contact surface;
a second main body member having a second contact surface comes into contact with the first contact surface; and
a dental-pulp-cavity groove which is formed in at least at one of the first contact surface and the second contact surface, and corresponds to a shape of the simulated dental-pulp cavity.

2. The dental-pulp-cavity model according to claim 1,
wherein the dental-pulp-cavity groove includes:
a tooth crown dental-pulp-cavity groove which constitutes a base end side of the simulated dental-pulp cavity; and
a root canal cavity groove that extends from the tooth crown dental-pulp-cavity groove to a tip end side, and
wherein the root canal cavity groove is formed only in one among the first contact surface and the second contact surface.

3. The dental-pulp-cavity model according to claim 1 or 2,
wherein a cross section of the first main body member is formed in a convex shape with the first contact surface as an end face,
wherein a cross section of the second main body member is formed in a concave shape with the second contact surface as a bottom face, and
wherein the first main body member and the second main body member are coupled by means of a dovetail groove mechanism which allows for coupling by sliding in a direction in which the simulated dental-pulp cavity extends.

4. The dental-pulp-cavity model according to claim 3,
wherein the width of the first contact surface and the width of the second contact surface gradually become narrower from a base end side toward a tip end side of the simulated dental-pulp cavity.

5. The dental-pulp-cavity model according to claim 3 or 4,
wherein a height of a convex shape portion of the first main body member is slightly higher than a depth of a concave shape portion of the second main body member.

6. The dental-pulp-cavity model according to any one of claims 1 to 5,
wherein a cross section in a width direction of the dental-pulp-cavity groove is formed in a polygonal shape.

7. The dental-pulp-cavity model according to any one of claims 1 to 6,
wherein a tip portion of the simulated dental-pulp cavity is open to outside.
